# EUROPÄISCHE PATENTSCHRIFT

(11) **EP 2 421 354 B1**
(45) Veröffentlichungstag und Bekanntmachung des Hinweises auf die Patenterteilung: **23.01.2013**
(21) Anmeldenummer: 10714299.4
(22) Anmeldetag: 21.04.2010
(51) Int. Cl.: A01F 12/56

(54) **SELBSTFAHRENDE ERNTEMASCHINE MIT ELEKTRISCH ANGETRIEBENER DRESCHTROMMEL**
HARVESTING MACHINE WITH ELECTRICALLY DRIVEN THRESHING DRUM
MACHINE DE RÉCOLTE AVEC UN BATTEUR CYLINDRIQUE ENTRAÎNÉ ÉLECTRIQUEMENT

(30) Priorität: 22.04.2009 DE 102009002579
(43) Veröffentlichungstag der Anmeldung: 29.02.2012
(73) Patentinhaber: Technische Universität Dresden, 01069 Dresden (DE); Hochschule für Technik und Wirtschaft Dresden, 01069 Dresden (DE)
(72) Erfinder: AUMER, M. Sc. Wolfgang, 93191 Rettenbach (DE); BERNHARDT, Gerd, 01728 Hänichen (DE); LINDNER, Mirko, 06922 Plossig (DE); MICHALKE, Norbert, 01259 Dresden (DE); KUSS, Hans, 01109 Dresden (DE); SCHUFFENHAUER, Uwe, 08412 Werdau (DE)
(74) Vertreter: Sperling, Thomas
(86) Internationale Anmeldenummer: PCT/EP2010/055264
(87) Internationale Veröffentlichungsnummer: WO 2010/122055

(56) Entgegenhaltungen:
- EP-A1- 1 174 019
- DE-U1- 20 002 284

## Beschreibung

Die Erfindung betrifft eine selbstfahrende Erntemaschine mit elektrisch angetriebener Dreschtrommel und bezieht sich weiterhin ganz allgemein auf rotatorisch betriebene Wirk- und Transportelemente von Landmaschinen.

Ein bevorzugtes Anwendungsgebiet der Erfindung sind Landmaschinen mit Dreschtrommeln.
Unter einer Dreschtrommel soll eine Vorrichtung verstanden werden, die in der Landwirtschaft zum Einsatz kommt und bei der Ernte von Körnerfrüchten, dem Trennen von Getreide-, Hirse- oder Maiskörnern aus den Fruchtständen, wie Ähren oder Kolben, dient. In der Dreschtrommel erfolgt der Dreschvorgang, bei dem schlagartige mechanische Belastungen ein Herauslösen der Körner aus den Fruchtständen bewirken. Der Vorgang der Korn-Stroh-Trennung wird auch als Entkörnung bezeichnet.
Dreschtrommeln sind Komponenten von Erntemaschinen, die in der Regel als selbstfahrende Maschinen, als Mähdrescher bezeichnet, ausgeführt sind.

Auf dem Gebiet der Konstruktion von selbstfahrenden Erntemaschinen mit Dreschtrommeln sind verschiedene Konzepte bekannt.

Man unterscheidet mechanische, hydraulische und elektrische Antriebskonzepte.

Bei mechanischen Antriebskonzepten für Dreschtrommeln erfolgt der Antrieb über Riemen und Getriebe. Dies ist mit einem hohen Aufwand bei Konstruktion und Montage verbunden. Elemente wie Variatoren, die eine stufenlose Veränderung der Drehzahl ermöglichen, erhöhen die Komplexität des mechanischen Antriebsstrangs.

Die Dreschtrommel wird gegenwärtig von mechanischen in Reihe geschalteten Antrieben bewegt. Damit entsteht eine hohe Elastizität im Antriebsstrang, die bei einer Belastung eine Drehzahländerung zur Folge hat. Das Drehmoment wird von einem Dieselmotor erzeugt und über das Dreschwerkvorgelege und den Dreschtrommelantrieb mit Riemen an die Dreschtrommel geleitet.

Eine weitere Möglichkeit ist der hydraulische Dreschtrommelantrieb, der ebenfalls ein elastisches Antriebssystem darstellt. Die Hydraulikpumpe ist mit dem Dieselmotor verbunden. Der Hydraulikmotor sitzt auf der Dreschtrornmelwelle und treibt die Dreschtrommel an. Die Drehzahl ist stufenlos und variabel mit dem Hydrauliksystem einzustellen.

Nach der EP 0 914 764 A1 wird eine Geschwindigkeitssteuerung einer Dreschtrommel einer selbstfahrenden Erntemaschine mit Hydraulikantrieb als Antriebskonzept vorgeschlagen. Auf die Hydraulikanlage wirkt eine elektronische Steuerung, die mit den Bedienelementen der Erntemaschine verbunden ist.
Nachteilig bei dieser Lösung ist, dass die Energieverluste im Hydraulikantrieb hoch sind und die Effizienz niedrig ist.

In der DE 1 659 533 U ist ein Elektroantrieb für eine Dreschtrommel beschrieben. Es wird eine stationäre Dreschmaschine, die für den Dreschvorgang auf das Feld gefahren wird und beim Dreschen an einer Stelle steht, offenbart. Zur Energieversorgung wird die Dreschmaschine an ein auf dem Feld vorhandenes Stromnetz angeschlossen. Es wird vorgeschlagen, einen kontinuierlichen Lastaufbau des Elektromotors durch eine Gleitkupplung an einem Riementrieb zu realisieren, um die erforderliche Antriebsleistung des Elektromotors zu vermindern und damit die Netzbelastung verringern zu können.

Nach der DE 100 34784 wird ein elektrischer Antrieb für eine Dreschtrommel offenbart, der dem Konzept des Außenläufermotors folgt und der als Gleichstrommotor ausgeführt ist.

Die DE 392 10 68 A1 befasst sich mit einem abweichenden Anwendungsgebiet für einen Außenläufermotor und beschreibt einen elektrisch betriebenen Handrasenmäher, der mit einem elektrischen Außenläufermotor ausgerüstet ist. Dieser Motor ist zur Kraftübertragung mit dem Schneidzylinder verbunden, sodass der Antrieb des Schneidzylinders nicht mehr wie beim Stand der Technik über die Antriebsräder erfolgt.

Die Antriebslösungen nach dem Stand der Technik sind somit entweder gar nicht für den Einsatz in einer Dreschtrommel vorgesehen oder sie weisen mangelnde Flexibilität bei der Steuerung der Trommeldrehzahl auf, wobei insbesondere bei hohen Erntegutdurchsätzen die Trommeldrehzahl stark absinkt, was den Durchsatz verringert und Verstopfungen zur Folge haben kann. Die Lösungen nach dem Stand der Technik weisen zudem eine schlechte energetische Effizienz auf, vor allem die steuerungstechnisch flexibleren hydraulischen Antriebe. Andere Lösungen fordern zudem hohen konstruktiven und Montageaufwand. In konventioneller Weise in Reihe geschaltete Antriebsstränge, als Riemen- oder Hydraulikgetriebe ausgeführt, weisen weiterhin eine unerwünscht hohe Elastizität auf, woraus bei Belastung eine Drehzahländerung resultiert. Zudem beansprucht die konventionelle Antriebstechnik viel Bauraum, der die zahlreichen aktiven Elemente aufnimmt.

Aufgabe der vorliegenden Erfindung ist es daher, eine selbstfahrende Erntemaschine mit einer Dreschtrommel mit verbesserter Korn-Stroh-Trennung anzubieten, deren Drehzahl unabhängig vom Erntegutdurchsatz stufenlos einstellbar ist und die für Konstruktion und Montage nur geringen Aufwand und minimalen Platzbedarf erfordert.

Die Aufgabe wird konzeptionsgemäß, durch eine selbstfahrende Erntemaschine nach Anspruch 1 gelöst. Dadurch kann die Antriebsenergie auf sehr flexible und auf platzsparende Weise zur Dreschtrommel geleitet werden. Weiterhin kommen alle die Vorteile hinsichtlich der flexiblen Steuerbarkeit eines Elektromotors zum Tragen, die mit einer elektronischen Steuerung realisierbar sind. Durch die Ausführung als Außenläufermotor kann der Durchmesser des Motors minimiert werden mit der Folge, dass eine hohe Drehzahl und ein kleines Drehmoment erzielt werden können.

Dadurch, daß die Dreschleisten direkt am Rotor des Elektromotors angebracht sind, kann die gesamte Dreschtrommel mit einem sehr geringen Durchmesser hergestellt werden, woraus wiederum ein niedriges erforderliches Antriebsmoment und eine hohe mögliche Drehzahl resultieren. In einer besonders bevorzugten Ausführungsform weist die Dreschtrommel einen Durchmesser zwischen 350 mm und 550 mm auf.

Eine besonders bevorzugte Ausführungsform der Erntemaschine weist die Anordnung mehrerer Dreschtrommeln nacheinander auf. Dadurch kann eine hohe Dreschleistung bei geringem Antriebsmoment erzielt werden. Die zugrundeliegende Konzeption dieser Ausgestaltung liegt darin, dass die Wirkfläche durch mehrere Dreschtrommeln vergrößert werden kann, wobei das Bauvolumen durch die Verringerung des Durchmessers der einzelnen Trommeln nicht, beziehungsweise nur wenig größer wird.

Eine bevorzugte Ausgestaltung der Erfindung weist einen Elektromotor auf, der derart ausgeführt ist, dass einerseits ein außerhalb des Stators liegender Rotor mit Trägerscheiben und daran befestigten Schlagleisten eines Dreschsatzes und andererseits ein innerhalb des Rotors liegender Stator mit dem Achsrohr verbunden sind. Diese vorteilhafte Ausführungsform ermöglicht die Wahl eines beliebigen Durchmessers der Dreschtrommel ungeachtet des Durchmessers des Motors.

Nach einer weiteren vorteilhaften Ausgestaltung der Erfindung ist das Achsrohr der Dreschtrommel mit Mitteln zur Kühlung des Elektromotors ausgestattet. Damit kann der Elektromotor wirksam gekühlt werden und es kommt dem Achsrohr neben der statischen Funktion noch eine Kühlfunktion für den Motor zu. Durch diese Funktionsintegration kann weiterer Bauraum eingespart oder an andere zusätzliche Komponenten des Mähdreschers vergeben werden.

Als besonders vorteilhaft hat es sich erwiesen, wenn der Elektromotor als Synchronmotor mit Statorwicklung und als Läuferaußengehäuse ausgebildetem Rotor ausgeführt ist. Dadurch können die Vorzüge eines Synchronmotors beim Antrieb der Dreschtrommel genutzt werden und die Drehzahl ist in einem weiten Bereich den Erfordernissen anpassbar.

In der bevorzugten Ausführungsform der Erfindung wird zur Permanenterregung das Magnetfeld des Rotors durch als Permanentmagnete ausgeführte Rotormagnete hervorgerufen. Vorteilhaft ist hierbei insbesondere der geringe Platzbedarf der Permanentmagnete, wodurch der Durchmesser des Elektromotors und damit der Durchmesser der Dreschtrommel weiter verringert wird. Durch diese Maßnahme wird es möglich, den Rotor leichter zu bauen.

Die Erfindung wird weiterhin alternativ dadurch gelöst, dass das Magnetfeld des Rotors durch Elektromagnete hervorgerufen wird.

Der Stator weist vorzugsweise eine Drehstromwicklung in einer raumsparenden axialen Anordnung auf, die als Zahnwicklung ausgeführt ist. Dadurch wird beim Herstellen der Zahnwicklung im Vergleich zu einer Einziehwicklung ein geringerer Bewicklungsaufwand benötigt. Die Spulenanzahl ist bei einer Zahnwicklung nur halb so groß.

Die Lehre der Erfindung wird, in einer verbesserten Ausführungsform, dadurch ausgestaltet, dass der Elektromotor über einen als Wechselrichter ausgeführten Drehzahlregler verfügt. Dadurch kann die Drehzahl des Motors optimal und lastunabhängig den Anforderungen angepasst beziehungsweise konstant gehalten werden. Ein wichtiger Vorteil gegenüber mechanischen Systemen besteht bei den elektrisch betriebenen Systemen darin, dass eine variable Drehmomentbegrenzung möglich ist.

In einer besonders vorteilhaften Weiterbildung der Erfindung ist der als Wechselrichter mit sensorloser Regelung ausgeführte Drehzahlregler des Elektromotors zur Drehrichtungsumkehr ausgebildet und geeignet. Dadurch kann die Drehrichtung des Motors leicht umgekehrt werden, um beispielsweise bei verklemmtem Erntegut dieses aus der Trommel zu fördern und die Dreschtrommel wieder beweglich zu machen. Somit können Verstopfungen an den Wirk- und Transportelementen der Maschine ohne zusätzliche Bauelemente durch einfache Drehrichtungsumkehr beseitigt werden.

In einer vorteilhaften Weiterbildung der Erfindung ist ein Verbrennungsmotor zum Antrieb der selbstfahrenden Erntemaschine und ein Energiespeicher vorgesehen, der einen Generator antreibt, welcher die zum Betrieb des Elektromotors erforderliche Elektroenergie bereitstellt. Dadurch können die Flexibilität eines Elektroantriebs mit der hohen Speicherdichte des Energieträgers für den Verbrennungsmotor in besonders vorteilhafter Weise kombiniert werden.

Die Vorteile der erfindungsgemäßen Vorrichtung sind folgendermaßen zusammenzufassen:
- stufenlose Steuerung der Drehzahl der Dreschtrommel,
- schnelle Drehzahlregelung zur Reduktion von Drehzahlschwankungen,
- einfache und integrierende Bauweise des elektrischen Antriebs,
- elektrische Leistungsübertragung mit flexibler Leitungsführung,
- freie räumliche Anordnung von Leistungserzeuger (Dieselmotor) und Leistungsverbraucher (Dreschtrommel) möglich, dadurch Einsparung von Bauraum und Erhöhung der konstruktiven Flexibilität,
- höhere Gutflussbreite wegen Reduzierung des Bauraums für den Antrieb möglich oder geringere Fahrzeugbreite bei gleicher Gutflussbreite möglich,
- kurzzeitige Überlastfähigkeit bis zum Mehrfachen des Nennmoments und
- Betrieb an der Leistungsgrenze des Systems möglich, dadurch hoher Auslastungsgrad der gesamten Maschine.

Besonders hervorzuheben ist, dass aus dem Einsatz des elektrischen Direktantriebs ein insgesamt hoher Wirkungsgrad der Erntemaschine resultiert.

Das Einsatzgebiet der Erfindung ist nicht auf Dreschtrommeln beschränkt sondern erstreckt sich allgemein auf Maschinen mit rotierenden Wirkelementen, wie beispielsweise Schneid- und Mahlrotoren, Hackertrommeln von Holzhackern, Dosierwalzenantriebe, Förderrotoren, Kratzbodenantriebe sowie Pick-Up-Antriebe von Ladewagen, Vorpresswalzen, Häckslertrommeln, Korncrackerwalzen und Beschleunigertrommeln von Feldhäckslern, Strohhäcksler, Spreuwurfgebläse, Reinigungsgebläse und Förderschnecken von Mähdreschern, Haspel und Einzugsschnecken von Mähdrescherschneidwerken, Rotoren für die Restkornabscheidung im Mähdrescher und Trommeln im Mehrtrommeldreschsystem. Das Antriebskonzept ist somit generell vorteilhaft für eine Vielzahl von Anwendungen geeignet, die rotierende Wirkelemente besitzen.
Ein anderer vorteilhafter Aspekt der Erfindung besteht darin, dass Direktantriebe die Dezentralisierung des Antriebssystems ermöglichen und damit verbunden Verluste bei der Energie-, Kraft- oder Bewegungsübertragung deutlich vermindert werden können.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen, wobei Figuren 1-3 kein Ausführungsbeipiel der Erfindung darstellen. Es zeigen:
- Fig. 1:: Schnittansicht einer Dreschtrommel im Halbprofil,
- Fig. 2:: Schnittansicht einer Dreschtrommel von der Seite,
- Fig. 3:: Halbschnitt Dreschtrommel groß,
- Fig. 4:: Halbschnitt Dreschtrommel klein mit direkt auf dem Rotor angebrachten Dreschleisten,
- Fig. 5:: elektrisches Antriebskonzept Dreschtrommel und
- Fig. 6:: mechanisches Antriebskonzept Dreschtrommel nach dem Stand der Technik.

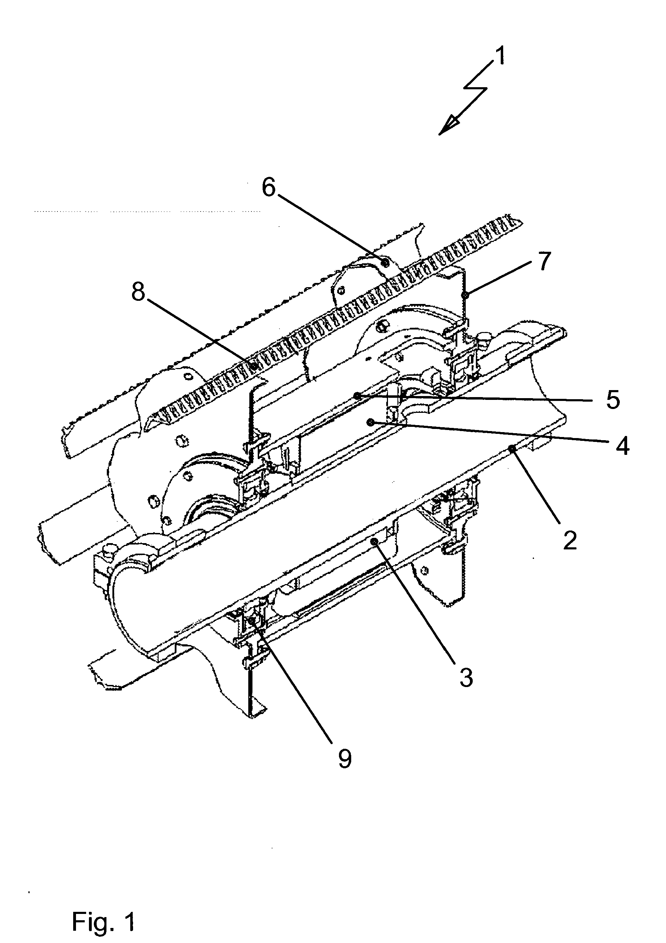

In **Figur 1** ist eine Dreschtrommel 1 im Halbprofil in Schnittansicht dargestellt. Der Direktantrieb ist auf und um das Achsrohr 2 der Dreschtrommel herum aufgebaut. Das Achsrohr 2 trägt auf der Außenseite den mit elektrischem Strom beaufschlagten Stator 3 des Elektromotors 4. Der Stator 3 steht in elektromotorischer Wechselwirkung mit dem Rotor 5, der aus permanentmagnetischen Elementen besteht und mit dem Dreschsatz 6 verbunden ist. Im bevorzugten Ausführungsbeispiel ist der Elektromotor 4 mittig in der Dreschtrommel 1 angeordnet.

Der Dreschsatz 6 besteht aus den sternförmigen Trägerscheiben 7 und den daran befestigten Schlagleisten 8. Die Trägerscheiben 7, von denen in der bevorzugten Ausführungsform zwei Stück zum Einsatz kommen, bestehen aus Stahlblech, das am äußeren Durchmesser tiefgezogen und gelocht ist und die Aufnahmen für die Dreschleisten 8 bilden. Am inneren Durchmesser sind die Trägerscheiben 7 mit dem Rotor 5 des Elektromotors 4 sowie dem Lagerelement 9 verbunden. Der Dreschsatz 6 ist auf dem Achsrohr 2 drehbar gelagert, wozu die Lagerelemente 9, die in der bevorzugten Ausführungsform als Wälzlager ausgeführt sind, dienen.

Das Achsrohr 2 erfüllt mehrere Funktionen. Dazu gehören eine tragende Funktion für den Stator 3, eine tragende Funktion für den Rotor 5 über die Lagerelemente 9 und eine kühlende Funktion für die Verlustwärme des Elektromotors 4.

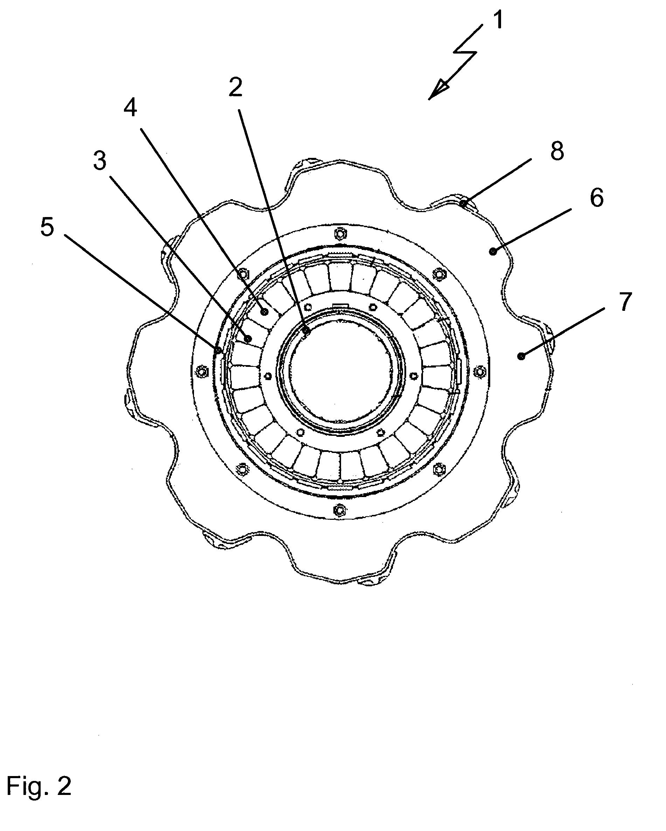

**Figur 2** zeigt die Dreschtrommel 1 aus Figur 1 im Schnitt und in Seitenansicht. Dabei erfolgt der Schnitt in der Mitte zwischen beiden Trägerscheiben 7. Daher sind als feststehende Teile der Anordnung der Stator 3 und, diese beiden Elemente haltend, das Achsrohr 2 zu erkennen. Konzentrisch dazu sind die beweglichen Elemente der Dreschtrommel 1 angeordnet. Dazu gehören der Rotor 5 des Elektromotors 4 und die daran befestigten Trägerscheiben 7. An den Trägerscheiben 7 sind die Dreschleisten 8, in der bevorzugten Ausführungsform acht Stück, befestigt, die gemeinsam mit den Trägerscheiben 7 den Dreschsatz 6 bilden.
Zur Steuerung des Elektromotors 4 kommt in der bevorzugten Ausführungsform ein Stromrichter zum Einsatz, der zudem eine schnelle Regelung zur Sicherung einer stabilen Drehzahl ermöglicht.

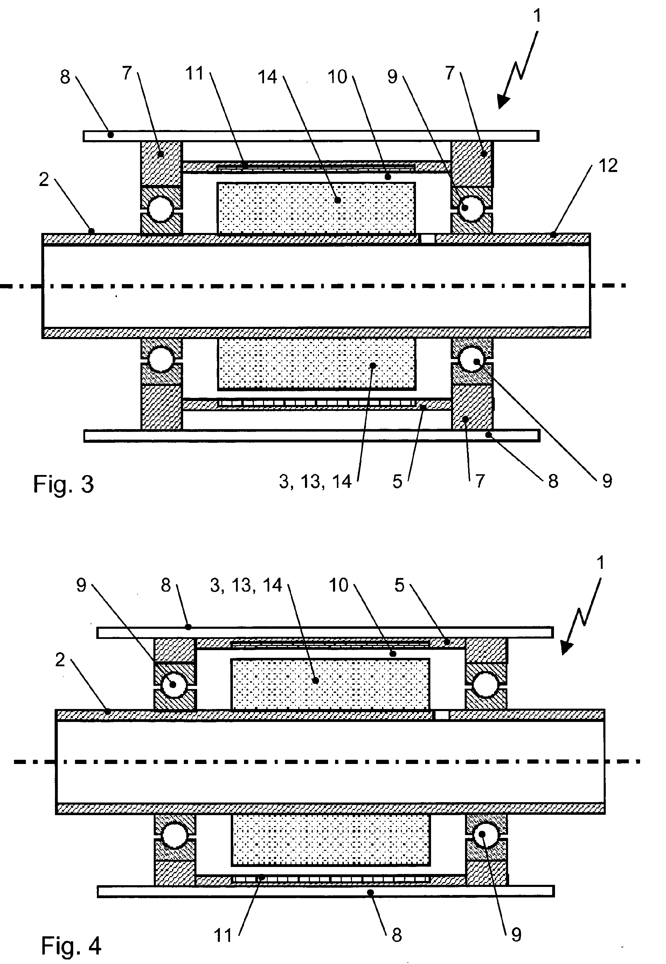

**Figur 3** zeigt die Dreschtrommel 1 in Schnittdarstellung. Gezeigt ist eine Ausführung der Dreschtrommel 1, bei der die Dreschleisten 8 über sternförmige Trägerscheiben 7 mit dem Rotor 5 verbunden sind. Der Rotor 5 beziehungsweise die sternförmigen Trägerscheiben 7 sind dazu auf den Lagerelementen 9, die ihrerseits auf dem Achsrohr 2 sitzen, gelagert. Der Antrieb der Dreschtrommel 1 erfolgt durch den Elektromotor 4, der aus dem Stator 3 und dem Rotor 5 besteht. Der Rotor 5 ist mit den Rotormagneten 11 ausgestattet, die das Rotormagnetfeld ausbilden. Der Stator 3 besteht aus dem Statorpaket 14 und der Statorwicklung 13. Zwischen den Rotormagneten 11 und dem Statorpaket 14 des Elektromotors besteht ein Luftspalt 10. Das Achsrohr 2 weist zur drehfesten Verbindung mit dem Rahmen des Mähdreschers mindestens eine Feder 12 auf.

Ein großer Durchmesser der Dreschtrommel 1 geht mit einer großen Abscheidefläche einem schweren Elektromotor einher. Die notwendigen großen Drehmomente erfordern jedoch nur eine niedrige Drehzahl. Die sternförmigen Trägerscheiben 7 übertragen die Kräfte vom Antrieb, dem Elektromotor, auf die Dreschleisten 8 und stützen die Radialkräfte des Dreschprozesses ab.

In der dargestellten bevorzugten Ausführungsform ist die Statorwicklung 13 eine Drehstromwicklung, die als Zahnwicklung ausgeführt ist. Dadurch wird eine raumsparende axiale Gestaltung ermöglicht. Der Rotor 5 mit Permanenterregung, realisiert durch die Rotormagneten 11, gestattet gegenüber der Anordnung mit Läuferwicklung einen größeren Bohrungsdurchmesser bei gleichem Außendurchmesser und somit ein höheres Drehmoment. Weiterhin sind keine elektrischen Kontakte zur Bestromung des Läufers nötig.

**Figur 4** zeigt die Dreschtrommel 1 in Schnittdarstellung. Gezeigt ist eine Ausführung der Dreschtrommel 1, bei der die Dreschleisten 8 direkt mit dem Rotor 5 verbunden und an diesem befestigt sind. Der Rotor 5 ist dazu auf den Lagerelementen 9, die ihrerseits auf dem Achsrohr 2 sitzen, gelagert. Der Antrieb der Dreschtrommel 1 erfolgt durch den Elektromotor, der aus dem Stator 3 und dem Rotor 5 besteht. Der Rotor 5 ist mit den Rotormagneten 11 ausgestattet, die das Rotormagnetfeld ausbilden. Der Stator 3 besteht aus dem Statorpaket 14 und der Statorwicklung 13. Zwischen den Rotormagneten 11 und dem Statorpaket 14 des Elektromotors besteht ein Luftspalt 10.

Der Durchmesser der Dreschtrommel 1 ist nicht festgelegt und frei wählbar. So resultiert aus einem kleinen Durchmesser zunächst eine kleine Abscheidefläche, wobei jedoch durch den geringeren Platzbedarf mehrere Dreschtrommeln 1 hintereinander angebracht werden können. Bei kleineren Durchmessern werden kleine Drehmomente, aber eine höhere Drehzahl notwendig. Dadurch wird der Elektromotor kleiner und leichter. Werden die Dreschleisten 8 direkt am Rotor 5 befestigt, dann ist kein freier Bauraum zwischen Dreschleisten 8 und Rotor 5 notwendig.

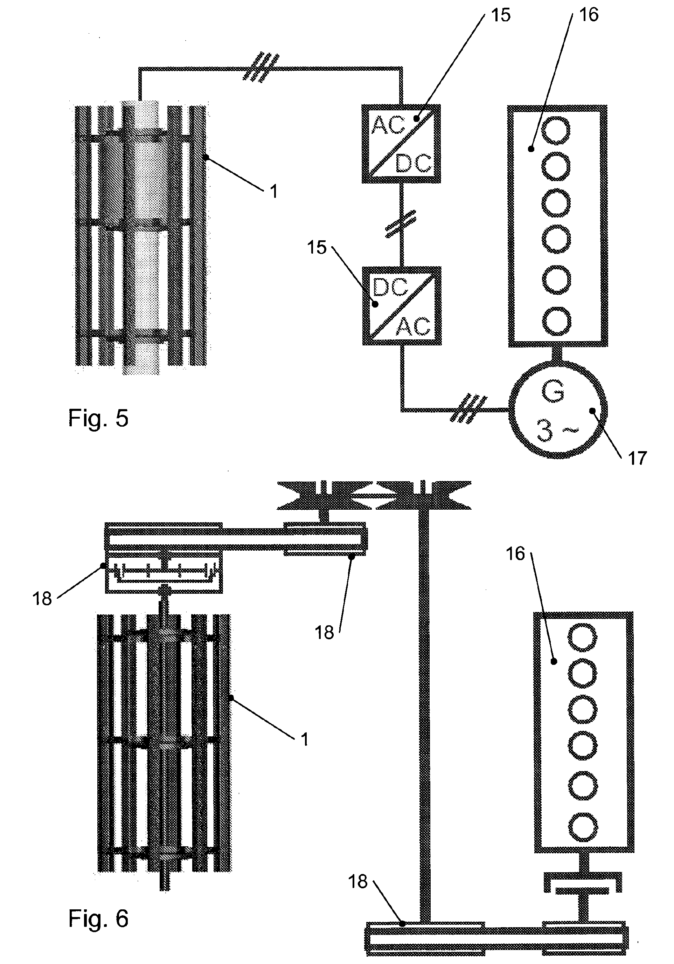

**Figur 5** zeigt den schematischen Aufbau des Antriebs einer Dreschtrommel 1. Der Verbrennungsmotor 16 gibt mechanische Energie ab, die von einem Generator 17 in elektrische Energie umgewandelt wird. Die elektrische Energie wird vom Wechselrichter 15, der durch eine nicht dargestellte Steuereinrichtung gesteuert wird, in der Weise umgewandelt, dass eine bedarfsgerechte Ansteuerung der Dreschtrommel erfolgt. Dazu fließen in einer bevorzugten Ausgestaltung Sensordaten in den Steueralgorithmus ein.

Der elektrische Direktantrieb ermöglicht eine Drehzahlregelung einschließlich der Drehrichtungsumkehr der Dreschtrommel 1. Diese wird in einer besonders bevorzugten Ausgestaltung durch den Wechselrichter 15 mit sensorloser Regelung realisiert. Lage- bzw. Drehzahlgebersysteme sind somit konzeptionsgemäß nicht nötig.

**Figur 6** zeigt den Stand der Technik bei einem Mähdrescher mit einer Dreschtrommel 1 mit einem Verbrennungsmotor 16 als zentralen Antrieb und einer in diesem Fall rein mechanischen Transmission, den mechanischen Antriebselementen 18. Im Beispiel dargestellt ist der Antrieb der Dreschtrommel 1 eines Mähdreschers vom Typ Claas Lexion. Bei einer Maschinenbreite von 3500 mm reduziert sich die Gutflussbreite, also die effektive Bearbeitungsbreite, auf nur 1700 mm. Grund ist der für die Transmission, die Antriebe der Dreschtrommel 1, erforderliche Bauraum.

### LISTE DER BEZUGSZEICHEN

- 1: Dreschtrommel
- 2: Achsrohr
- 3: Stator
- 4: Elektromotor
- 5: Rotor
- 6: Dreschsatz
- 7: sternförmige Trägerscheiben
- 8: Dreschleiste, Schlagleiste
- 9: Lagerelement
- 10: Luftspalt
- 11: Rotormagnete
- 12: Feder
- 13: Statorwicklung
- 14: Statorpaket
- 15: Wechselrichter
- 16: Verbrennungsmotor
- 17: Generator
- 18: mechanische Antriebselemente

## Patentansprüche

1. Selbstfahrende Erntemaschine mit elektrisch angetriebener Dreschtrommel (1), wobei ein als permanenterregter Synchron-Außenläufermotor ausgeführter Elektromotor (4) als Direktantrieb auf einem Achsrohr (2) einer Dreschtrommel (1) angeordnet ist und die Dreschtrommel (1) Dreschleisten (8) aufweist, **dadurch gekennzeichnet, dass** die Dreschleisten (8) der Dreschtrommel (1) direkt am Rotor (5) des Elektromotors (4) und der Stator (3) am Achsrohr (2) angeordnet sind.

2. Erntemaschine nach Anspruch 1, **dadurch gekennzeichnet, dass** die Dreschtrommel (1) einen Durchmesser zwischen 350 mm und 550 mm aufweist.

3. Erntemaschine nach Anspruch 1 oder 2, **dadurch gekennzeichnet, dass** mehrere Dreschtrommeln (1) nacheinander angeordnet sind.

4. Erntemaschine nach einem der Ansprüche 1 bis 3, **dadurch gekennzeichnet, dass** das Achsrohr (2) mit Mitteln zur Kühlung des Elektromotors (4) ausgestaltet ist.

5. Erntemaschine nach einem der Ansprüche 1 bis 4, **dadurch gekennzeichnet, dass** der Stator (3) in einer raumsparenden axialen Anordnung eine Drehstromwicklung aufweist, die als Zahnwicklung ausgeführt ist.

6. Erntemaschine nach einem der Ansprüche 1 bis 5, **dadurch gekennzeichnet, dass** der Elektromotor (4) über einen als Wechselrichter (15) ausgeführten Drehzahlregler und eine variable Drehmomentbegrenzung verfügt.

7. Erntemaschine nach Anspruch 6, **dadurch gekennzeichnet, dass** der als Wechselrichter (15) mit sensorloser Regelung ausgeführte Drehzahlregler des Elektromotors (4) zur Drehrichtungsumkehr ausgebildet ist.

8. Erntemaschine nach einem der Ansprüche 1 bis 7, **dadurch gekennzeichnet, dass** ein Verbrennungsmotor (16) zum Antrieb der selbstfahrenden Erntemaschine und ein Energiespeicher vorgesehen ist, der einen Generator (17) antreibt, welcher die zum Betrieb des Elektromotors (4) erforderliche Elektroenergie bereitstellt.

## Claims

1. A self-propelled harvester having an electrically driven threshing drum (1), wherein an electric motor (4) designed as a permanently excited synchronous external rotor motor as direct drive is arranged on an axle tube (2) of a threshing drum (1) and the threshing drum (1) has threshing bars (8), **characterized in that** the threshing bars (8) of the threshing drum (1) are arranged directly on the rotor (5) of the electric motor (4) and the stator (3) is arranged on the axle tube (2).

2. The harvester according to Claim 1, **characterized in that** the threshing drum (1) has a diameter of between 350 mm and 550 mm.

3. The harvester according to Claim 1 or 2, **characterized in that** several threshing drums (1) are arranged one after another.

4. The harvester according to one of Claims 1 to 3, **characterized in that** the axle tube (2) is configured with means for cooling the electric motor (4).

5. The harvester according to one of Claims 1 to 4, **characterized in that** the stator (3) has in a space-saving axial arrangement a three-phase winding, which is embodied as a tooth winding.

6. The harvester according to one of Claims 1 to 5, **characterized in that** the electric motor (4) has a speed controller, embodied as inverter (15), and has a variable torque control.

7. The harvester according to Claim 6, **characterized in that** the speed controller of the electric motor (4), embodied as inverter (15) with sensorless control, is constructed for reversal of rotation direction.

8. The harvester according to one of Claims 1 to 7, **characterized in that** an internal combustion engine (16) is provided for the drive of the self-propelled harvester and an energy store is provided, which drives a generator (17) which provides the electrical energy necessary for the operation of the electric motor (4).

## Revendications

1. Machine de récolte automotrice comprenant un tambour de battage (1) entraîné électriquement (1), sachant qu'un moteur électrique (4) conçu en tant que moteur synchrone à induit extérieur à excitation permanente est disposé en tant qu'entraînement direct sur un tube d'essieu (2) d'un tambour de battage (1) et le tambour de battage (1) présente des barres de battage (8), **caractérisée en ce que** les barres de battage (8) du tambour de battage (1) sont disposées directement sur le rotor (5) du moteur électrique (4) et le stator (3) sur le tube d'essieu (2).

2. Machine de récolte selon la revendication 1, **caractérisée en ce que** le tambour de battage (1) présente un diamètre entre 350 mm et 550 mm.

3. Machine de récolte selon la revendication 1 ou 2, **caractérisée en ce que** plusieurs tambours de battage (1) sont disposés l'un derrière l'autre.

4. Machine de récolte selon l'une des revendications 1 à 3, **caractérisée en ce que** le tube d'essieu (2) est conçu avec des moyens pour refroidir le moteur électronique (4).

5. Machine de récolte selon l'une des revendications 1 à 4, **caractérisée en ce que** le stator (3) présente un bobinage triphasé, conçu en tant que bobinage dentelé, dans un agencement axial économisant de l'espace.

6. Machine de récolte selon l'une des revendications 1 à 5, **caractérisée en ce que** le moteur électrique (4) dispose d'un régulateur de vitesse conçu en tant qu'onduleur (15) et d'une délimitation de couple variable.

7. Machine de récolte selon la revendication 6, **caractérisée en ce que** le régulateur de vitesse conçu en tant qu'onduleur (15) du moteur électrique (4) est conçu pour inverser le sens de rotation.

8. Machine de récolte selon l'une des revendications 1 à 7, **caractérisée en ce qu'**un moteur à combustion (16) est prévu pour entraîner la machine de récolte automotrice et un accumulateur d'énergie est prévu, lequel entraîne un générateur (17) qui fournit l'énergie électrique nécessaire au fonctionnement du moteur électrique (4).
